# EUROPEAN PATENT SPECIFICATION

(11) **EP 0 593 416 B1**
(45) Date of publication and mention of the grant of the patent: **13.03.1996**
(21) Application number: 94200089.4
(22) Date of filing: 22.10.1990
(51) Int. Cl.: G01V 1/38, G01V 1/20

(54) **Seismic cable**
Seismisches Kabel
Câble sismique

(30) Priority: 26.10.1989 NO 894261
(43) Date of publication of application: 20.04.1994
(62) Divisional of application: 90915529.3
(73) Proprietor: DEN NORSKE STATS OLJESELSKAP A.S., N-4001 Stavanger (NO)
(72) Inventor: Svenning,Bjornar, N-7021 Trondheim (NO); Berg,Eivind, N-7053 Ranheim (NO)
(74) Representative: Rees, David Christopher

(56) References cited:
- WO-A-91/06879
- US-A- 4 870 625
- JOURNAL OF THE ACOUSTICAL SOCIETY OF AMERICA., vol.83, no.1, January 1988, NEW YORK US, pages 93-102, R.D.STOLL et al., 'Shallow seismic experiments using shear waves'

## Description

The present invention relates to a method for conducting marine seismic metering. More specifically, the invention concerns seismic exploration of the substrata at sea, where pressure waves and shear waves from a substratum are measured in response to the release of pressure and shear energy.

Marine seismic explorations are usually carried out by a seismic cable provided with several hydrophones being towed at a certain depth. Pressure waves can be released near the cable in several ways. This usually takes the place by means of air guns. The pressure wave energy moves downwards through the substratum, but parts of the pressure waves are reflected from areas where there are acoustic impedance characteristics in the substratum. Hydrophones register the reflected pressure waves in the water and transform this information to electric signals which are received and processed on the seismic ship which tows the cable. Using this method, only reflected or converted shear to pressure energy is recorded. However it is known that down in the substratum both pressure waves and shear waves are reflected. The shear waves do not travel in water and therefore cannot be detected by a hydrophone cable.

In US patent No. 4725990, a marine cable is suggested, which is dragged along the seabed and which is provided with geophones. The cable is supposed to detect shear forces, but it has several disadvantages and weaknesses. During employment it will firstly be problematic classifying pressure waves which are reflected from the sea's surface. Secondly, all of the components are enclosed in a sleeve, which causes blows against the cable to travel to the geophones. Nor will the geophones achieve the desired contact with the sea bed. Furthermore, only one-component data is measured.

EP-A-210925 is concerned with a downhole seismic exploration device. O-ring supports are employed to isolate the seismic detectors from a logging cable. US 4500980 is concerned with a marine seismic streamer cable in which connecting arrangements for succeeding sections of the cable are designed to distribute tensile stress and to eliminate rotation. US 4870625 is concerned with a method of conducting marine seismic exploration in which a streamer cable is used. In this case, geophones are suspended from the streamer cable.

It is an object of the invention to provide a new and improved cable for measurement of both shear waves and pressure waves.

It is an object of the present invention to provide an improved method of conducting marine seismic exploration which may provide a more accurate representation of subsea strata.

According to the invention, there is provided a method for conducting marine seismic metering using a seabed cable containing a geophone cable and having a series of geophones assembled in succeeding cable spheres which are shock insulated against the geophone cable, each cable sphere being constructed with a dimension and weight relative to the cable diameter to provide good contact with the sea bed characterised in that the cable includes a hydrophone cable, which floats in a pre-determined position above the geophone cable by means of spacers; the method comprising: pulling the cable forward one length at a time and each time generating one or more seismic waves; recording the pressure waves and shear waves in the lower cable; recording pressure waves from the seabed and the surface mirror by the hydrophone elements; and processing the collected data.

Preferably, the seismic cable is pulled behind an underwater vessel and that, as a seismic source, one or more vibrators which are pressed/sucked against the seabed are arranged on the underside of the underwater vessel. Preferably, the seismic source comprises explosions in drill holes in the seabed.

Attention is drawn to the present Applicants' copending application, published under No. EP-A-497814 (WO 91/06877), from which the present application is divided and which is concerned with an improved marine seismic cable, per se.

The invention may be carried into practice in various ways and some embodiments will now be described by way of example with reference to the accompanying drawings, in which:
Figure 1 shows the use of a sea-bed cable during seismic exploration, according to the invention;
Figure 2 illustrates the execution of a seismic exploration;
Figure 3 is an exploded perspective view of the sphere of a geophone cable;
Figure 4 is an exploded view of middle and lower ball parts;
Figure 5 is an exploded perspective view of the clamping parts of the sphere;
Figure 6 is a perspective view of the upper sphere part;
Figure 7 is a section through the middle geophone ball part; and
Figure 8 is a perspective view of the sphere, equipped with fins.

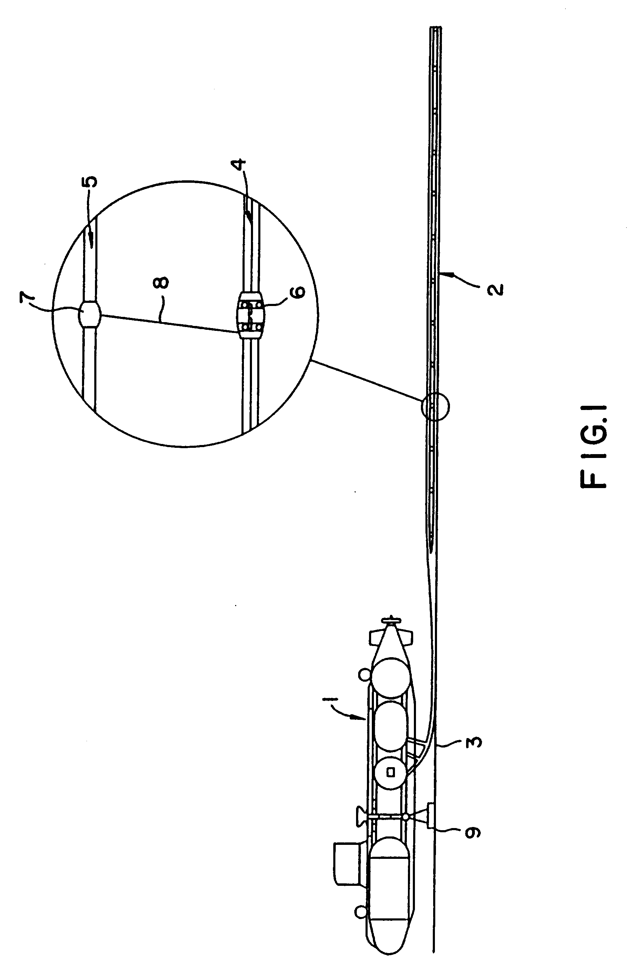

In Figure 1, an underwater vessel 1 is shown, which tows a seismic cable 2 along the sea-bed 3 for seismic exploration of the substratum beneath the sea-bed. Such a cable will be rather long, often 2-3 kilometres. The seismic cable 2 comprises two parallel cables, a lower geophone cable 4 and an upper hydrophone cable 5. The geophone cable 4 is towed along the bed 3 with which it is to have optimum contact, whilst the hydrophone cable 5 floats at a predetermined distance above the geophone cable 4. Cable spheres 5 containing geophones are located along the geophone cable 4 at constant intervals. The cable spheres 6 will be relatively heavy and make good contact with the bed.

In the area above each cable sphere on the geophone cable 4, a hydrophone element 7 is located on the hydrophone cable 5, the purpose of which will be described below. The hydrophone cable 5 is of a type which is well known and commercially available. Hydrophones can also be arranged in simple floating elements which are fastened to the geophone cable with individual cables of known length.

In order to ensure a definite distance between each cable sphere 6 and the hydrophones 7 a spacer 8 is arranged at each cable sphere 6.

In Figure 1, the underwater vessel 1 is shown as a seismic ship, which in many ways will be advantageous compared with a surface vessel. There will be no dependency on weather conditions and there will be no transmission of movement against the cable 2 as a result of wave-influence on the ship. Positioning of the cable 2 will also be easier. In pulling out the cable it will be necessary to raise it from the seabed. In this way, the geophone cable will work itself down into the seabed and achieve good contact. In sea areas where the bed is hard, it may be necessary to equip the foremost end of the cable with a tool which can make a ditch in the seabed. Such a tool can be a plough or a chain which is mounted between the tow-vessel and the geophone cable. It is not however a condition of the invention that an underwater vessel 1 is used, although it is a part of a preferred concept.

The seismic ship will be provided with a source 9 for generating wave energy down into the substratum near the cable 2. The wave energy source can come from many known types of generator. Air cannon, which is the most usual source in marine surface seismology is a possibility, although it generates "secondary sources" (bubble effects) which will increase with increasing sea depth. Explosive sources is another well tried source of energy which gives very good results. The explosives can be laid out on the seabed or drilled into the formation.

In using an underwater vessel 1, a marine seabed vibrator will be particularly advantageous. A modified version of existing vibrators can be used, where is pressed against the seabed and functions as land seismic vibrators in operation. For softer seabed conditions, it can be appropriate to cause under-pressure in the vibrator shoe so that it adheres to the seabed. When the picture or pulse generation has increased so that it is released from the seabed. This method of operation will, using free-floating or light underwater vessels, increase productivity substantially, as compared with for example, ballasting.

An advantage of placing a vibrator on the seabed is that it is possible to make a greater part of the energy penetrate down into the seabed. Furthermore, control and flexibility of the transmitted source signatures are improved.

By placing a vibrator source on the seabed, it is also possible to generate shear waves. This can be done in several ways. A suitable way is to have two vibrators which will generate pressure waves when they operate in-phase and shear waves in counter-phase. By using several vibrators, polarisation of the transmitted signals will be achieved.

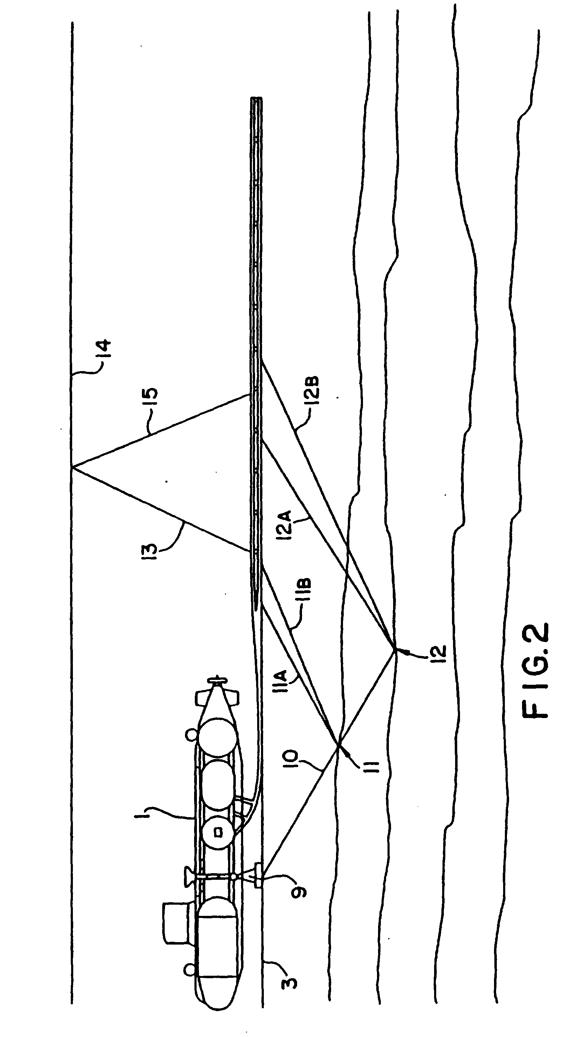

In the following, a seismic exploration according to the invention will be described, with reference to Figure 2.

A pressure wave or camined pressure and shear wave is generated from a source 9 and travels from the seabed 3 and down into the substratum. In areas where there is variation in acoustic impedance between the layers in the formation, for example at points 11 and 12, part of the wave will be reflected upwards as pressure and shear waves. They are indicated in Figure 2 as waves 11a, 11b and 12a, 12b from the points 11 and 12 and the waves are registered by the geophones and hydrophones. The shear waves do not travel in water and will stop at the seabed where they will convert into pressure waves. The pressure waves will travel further upwards, in Figure 2 illustrated as wave 13 which will reach the water surface 14 where part of it will be reflected back towards the seabed as wave 15. The aim of the hydrophone cable 5 is exactly the register the reflection waves from the surface so that when the collected data is processed, they can be filtered out. This filtering out is made possible by having two measuring points of known orientation and distance.

As mentioned previously the hydrophones are located along a hydrophone cable 5 in single elements on a known type. The suggested geophone spheres 6 on the geophone cable 4 are however novel and form a part of the invention.

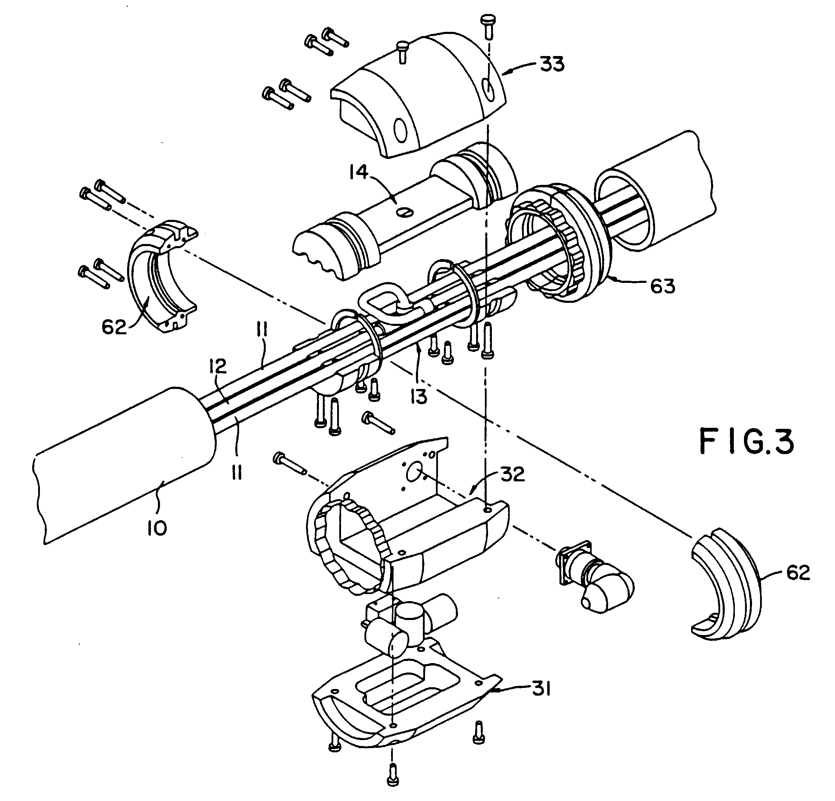

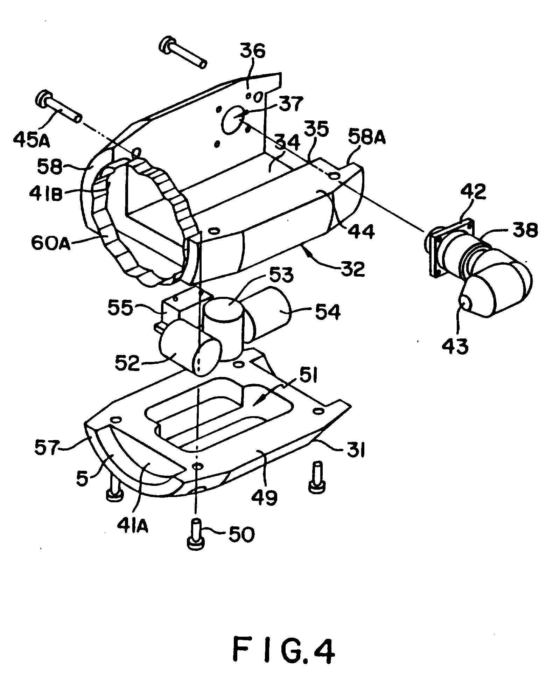

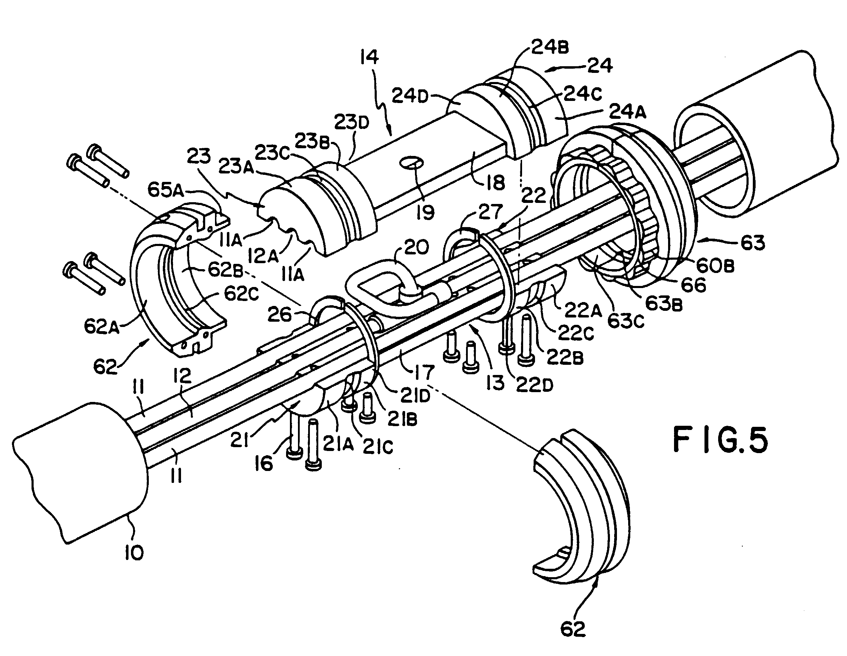

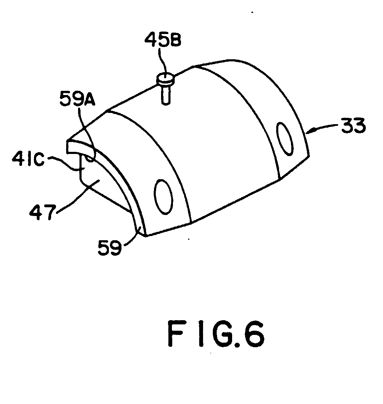

In Figure 3 an exploded overall view of one of the cable spheres 6 of the geophone cable 4 is shown and in the Figures 4 to 6, the various parts of the cable sphere are shown to a larger scale. The geophone cable comprises a protective sleeve 10 and three cables inside this. The two outer cables will be pulling-cables 11, and the middle cable will be a data cable 12 for transmission of information back to the seismic ship 1.

The cables rest in a two-piece clamp, 13,14 where, inside the clamp, a groove 11a, 12a for each cable is arranged. The lower clamp part 13 and the upper clamp part 14 are arranged in the illustrated embodiment to be fastened together by a bolt connection, shown in the figure by vertically directed clamp screws 16. The middle parts 17, 18 are formed as rectangular plates, but with the mentioned cut-out or moulded grooves 11a, 12a for the cables respectively on the clamp parts' top surface and underside. The middle area 18 of the upper clamp part 14 has an opening 19 for passage of a connecting wire 20 from the data cable 12. The end areas 21, 22, 23, 24 of the clamp parts 13,14 which in the assembled position will be cylindrically formed, comprise outer surfaces 21a-24a and inner sufaces 21b-24b along the length of the cable, and between these steering grooves 21c-24c adapted to a cam in an outside clamp, which will be described later. The vertical surfaces 21d-24d on the cylindrical end parts' inner-facing sides are adapted to hold two splittable wave rings 26,27. The function of the wave rings 26,27 will be described later.

The actual cable sphere 6 is divided into three and comprises a lower part 31 where geophones are placed, a middle part 32 through which the cables 11, 12 run and an upper part 33 which is virtually a cover for the middle part.

The middle part of the cable sphere includes an internal cavity with rectangular floor 34 and two vertical walls 35, 36 extending along the length of the cable.

The internal clamp parts 13,14 will be positioned inside the cavity, but in such a way that the clamp is mechanically insulated against transmission of blows to the cable sphere. In one of the walls 36 a channel 37 is arranged for a cable (not shown) to, for instance, the geophones.

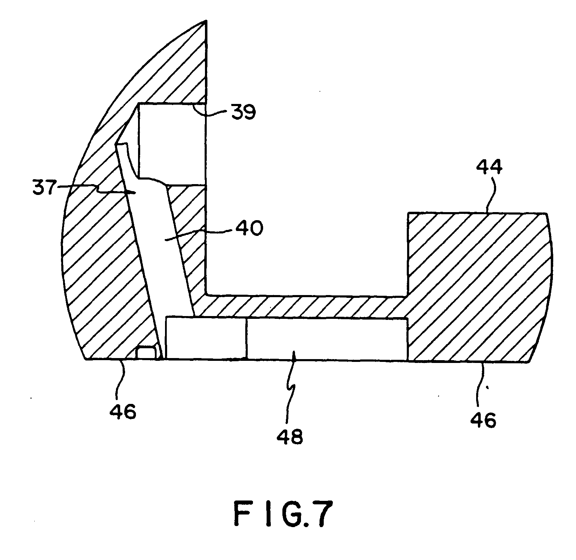

Figure 7 shows in detail how the channel 37 can be designed with a horizontal inlet 39 in which a connector 38 is placed and with a downwardly facing channel 40 to the underside 32 of the middle cable sphere part. The signal cable (not shown) is connected to the end of the connector and extends through the channel 37 and down to e.g. the geophones. The connector 38 will preferably be provided with a flange 42 which can be screwed fluid-tight to the wall 36 and will at its free end 43 be adapted to connect with the connecting wire 20. The connector 38 as such is of a known type and is commercially available.

The external faces of the walls of the middle sphere part 32 comprise segments in the sphere part's approximately cylindrically and partly conically formed outer surface. The one wall 36, which contains the channel 37, considerably higher than the outer wall 35. The short wall 35 has a horizontally abutment surface 44 while the high wall has a vertical flat surface, both adapted to be coupled together with corresponding abutment surfaces on the upper sphere part 33. The outer face of the upper sphere part 33 cover upper part of the walls' outer surfaces. To connect the parts, bolt-connections are used in the form of respectively horizontal screws 45a and vertical screws 45b.

The underside of the middle sphere part comprises, as is partly evident from Figure 7, a horizontal, downwardly facing contact surface 46 along the circumference. On the inside of the contact surface 46 there is a cavity 48 into which the previously mentioned channel 40 leads.

The lower sphere part 31 includes a corresponding upwardly-facing horizontal contact surface 49 which can be connected to the underside of the middle sphere part by means of a screw connection, shown in Figure 3 as a vertical screws 50. The lower sphere part 31 also includes a closed cavity 51 with a geometric shape which corresponds with the shape of the cavity 48 on the underside of the middle sphere part 32 and which in its mounted position becomes an extension of this cavity. This will subsequently be referred to as the geophone cavity 48,51.

Firstly, in the geophone cavity 48, 51, three geophones 52, 53, 54 are placed, orientated in the x, y and z directions. Secondly, a rotation and inclination meter 55 (inclinometer) is included. The geophones 52, 53, 54 and the rotation and inclination meter 55 are connected to the cable 12 via the wire which extends through the canal 37 of the middle sphere part. In a preferred embodiment, the geophones 52, 52, 54 and the rotation and inclination meter 55 can be moulded in the geophone cavity 48, 51 by means of a polymer material. The geophone cavity 48, 51 is, as mentioned, closed and shear and pressure waves can travel by the cable sphere moving at the same rate as the surrounding medium.

The geophones 52, 53, 54 and the rotation and inclination meter 55 are basically known and commercially available products.

Upper sphere part, as mentioned previously, is a kind of cover for the cavity in the middle cable sphere. In addition to having an outer surface which completes the outer surface of the middle sphere part, the upper sphere part 33 includes two transvers walls 47 which close the cavity upper sphere part at each end.

As will be apparent from the Figures, the wall thickness in the cable sphere 6 is quite considerable in order to give the sphere a heavy weight and thereby ensure good contact with the seabed. The cable sphere is preferably made of a metallic material, preferably steel.

The arrangement and mounting of the sphere component 6 in relation to inner clamps 13,14 and through-running cable 11, 12 will now be described in more detail.

As mentioned above, the cable sphere 6 is mechanically isolated from the actual cable. In order to insulate against flows and transmissions of movement along the length of the cable, wave rings 26,27 are mounted; these differ from ordinary plate rings in that they have a wave shape in the axial direction. The wave rings 26,27 are preferably made of an elastic metal, for example spring steel. The outer surface of the wave rings is mounted against the end portions 41a-41c of the sphere parts. Axial shocks in the cable will be subdued by the wave rings.

At each end, the cable sphere parts 31, 32, 33 have an outwardly facing collar 57, 58, 59 which have a radially inward-facing bearing surface 57a-59a for the accommodation of a wave shaped spring 60a, 60b. At each end, external outer clamps divided into two 62, 63 are placed . In Figure 7, they are shown separated (clamp 62) and assembled (clamp 63). The outer clamps 62, 63 comprise internally an axially outward-facing surface 62a, 63a, an axially inwardly facing surface 62b, 63b and cams 62c, 63c arranged in between these. The cam 62c, 63c, is adapted to fit the groove 21c-24c in the inner clamp. The end of the cable sleeve 10 can, in a preferred embodiment, be pressed between the outer face of the clamp 21a-24a and the outer face 62a, 63a of the outer clamp.

The outer clamps 62, 63 will have, externally, along the length of the cable, an inwardly facing gradation which comprises a shoulder 65a, 65b. The inner surfaces of the two wave springs 60a, 60b are designed to be located on the shoulders 65a, 65b as shown in the assembled outer clamp 63 in Figure 3. The function of the wave springs 60a, 60b is to absorb and prevent radial shocks from the cable from travelling to the cable sphere 6. This is achieved by using a cylindrical spring which is wave shaped in the radial direction. Such a wave spring will act approximately as several independent springs placed in a corresponding annulus. The wave springs are preferably made of an elastic, metallic material, preferably spring steel. The external surface of the outer clamps 62,63 will incidentally only be an extension of the outer surface of the cable sphere and adapted to this. It is preferable that the outer clamps 62,63 are also partly the end parts of the cable sphere narrow off conically towards the change-over to the cable. The middle part of the cable sphere 6 will be cylindrically shaped. This is to ensure that the cable spheres will tend to become snagged as little as possible when the cable is dragged along the seabed.

The two halves of the outer clamps are preferably mounted together by means of a screw connection, shown in Figure 7 as horizontal screws.

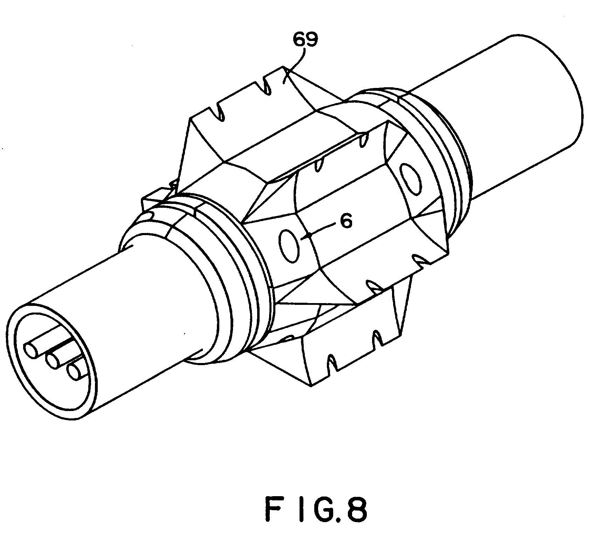

In order to ensure further that each cable sphere achieves a good contact with the seabed, it can be provided with fins 69 as illustrated in Figure 8. The fins 69 will, particularly where the bed is soft, penetrate down into the seabed, which will be of particular importance for the detection of wave movements at a horizontal level in the seabed.

## Claims

1. A method for conducting marine seismic metering using a seabed cable (2) containing a geophone cable (4) and having a series of geophones assembled in succeeding cable spheres (6) which are shock insulated against the geophone cable (4), each cable sphere (6) being constructed with a dimension and weight relative to the cable diameter to provide good contact with the sea bed characterised in that the cable (2) includes a hydrophone cable (5), which floats in a pre-determined position above the geophone cable (4) by means of spacers (8); the method comprising: pulling the cable (2) forward one length at a time and each time generating one or more seismic waves; recording the pressure waves and shear waves in the lower cable; recording pressure waves from the seabed (3) and the surface mirror (14) by the hydrophone elements (5); and processing the collected data.

2. A method as claimed in Claim 1, characterised in that the seismic cable (2) is pulled behind an underwater vessel (1) and that, as a seismic source, one or more vibrators which are pressed/sucked against the seabed (9) are arranged on the underside of the underwater vessel (1)

3. A method as claimed in Claim 1 or Claim 2, characterised in that the seismic source comprises explosions in drill holes in the seabed (3).

## Patentansprüche

1. Verfahren zur Durchführung einer seismischen Meeresmessung unter Verwendung eines Meeresbodenkabels (2), das ein Geophonkabel (4) enthält und eine Anzahl von in aufeinanderfolgenden Kabelkugeln (6) zusammengebauten Geophonen aufweist, die gegenüber dem Geophonkabel (4) stoßisoliert sind, wobei jede Kabelkugel (6) mit einer Abmessung und einem Gewicht, bezogen auf den Kabeldurchmesser, gestaltet ist, um für einen guten Kontakt mit dem Meeresboden zu sorgen, **dadurch gekennzeichnet, daß** das Kabel (2) ein Hydrophonkabel (5) umfaßt, das in einer vorbestimmten Stellung oberhalb des Geophonkabels (4) mittels Abstandshaltern (8) schwimmt, wobei das Verfahren umfaßt: Vorwärtsziehen des Kabels (2) jeweils um eine Länge und jeweiliges Erzeugen einer oder mehrerer seismischer Wellen, Aufzeichnen der Druckwellen und Scherwellen in dem unteren Kabel, Aufzeichnen der Druckwellen von dem Meeresboden (3) und dem Oberflächenspiegel (14) mittels der Hydrophonelemente (5) und Verarbeiten der gesammelten Daten.

2. Verfahren nach Anspruch 1, **dadurch gekennzeichnet, daß** das seismische Kabel (2) hinter einem Unterwasserfahrzeug (1) hergezogen wird und daß als seismische Quelle ein oder mehrere Schwingungserzeuger, die gegen den Meeresboden (9) gedrückt/angesaugt werden, an der Unterseite des Unterwasserfahrzeugs (1) angeordnet ist bzw. sind.

3. Verfahren nach Anspruch 1 oder Anspruch 2, **dadurch gekennzeichnet, daß** die seismische Quelle Explosionen in Bohrlöchern in dem Meeresboden (3) umfaßt.

## Revendications

1. Procédé pour effectuer des mesures sismiques marines, utilisant un câble de fond marin (2) contenant un câble à géophones (4) et comprenant une série de géophones assemblés dans des sphères de câble successives (6) qui sont isolées des chocs contre le câble à géophones (4), chaque sphère de câble (6) étant construite avec une dimension et un poids par rapport au diamètre du câble visant à assurer un bon contact avec le fond de la mer, caractérisé en ce que le câble (2) comporte un câble à hydrophones (5), qui flotte dans une position prédéterminée au-dessus du câble à géophones (4) grâce à des éléments d'espacement (8); le procédé comprenant : le tirage du câble (2) pour le faire avancer d'une longueur à la fois et la génération à chaque fois d'une ou plusieurs ondes sismiques; l'enregistrement des ondes de pression et des ondes de cisaillement dans le câble inférieur; l'enregistrement des ondes de pression provenant du fond de la mer (3) et du miroir de surface (14) au moyen des hydrophones (5); et le traitement des données collectées.

2. Procédé suivant la revendication 1, caractérisé en ce que le câble sismique (2) est tiré derrière un vaisseau sous-marin (1) et qu'à titre de source sismique, un ou plusieurs vibrateurs (9) qui sont pressés/aspirés contre le fond de la mer (3) sont disposés sur le dessous du vaisseau sous-marin (1).

3. Procédé suivant la revendication 1 ou la revendication 2, caractérisé en ce que la source sismique comprend des explosions dans des trous de forage dans le fond de la mer (3).
